(19) Europäisches Patentamt
European Patent Office
Office européen des brevets

(11) **EP 3 035 035 B1**

## (12) EUROPEAN PATENT SPECIFICATION

(45) Date of publication and mention
of the grant of the patent:
**22.07.2020 Bulletin 2020/30**

(51) Int Cl.:
***G01N 21/25*** *(2006.01)*     ***G01N 21/86*** *(2006.01)*
***G01J 3/46*** *(2006.01)*

(21) Application number: **14198818.8**

(22) Date of filing: **18.12.2014**

(54) **A method of continuous measurement of colouring of textile surfaces and a measuring machine for carrying out the method**

Verfahren zur kontinuierlichen Messung von Farben der Textiloberflächen und Messvorrichtung zur Ausführung des Verfahrens.

Procédé pour la mesure continue de couleur des surfaces textiles et machine pur l'exécution du procédé.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.06.2016 Bulletin 2016/25**

(73) Proprietor: **CLUTEX - Klastr Technické Textilie, o.s.**
**46007 Liberec (CZ)**

(72) Inventors:
 • **VIK, Michal**
 **46012 Liberec (CZ)**

 • **CEJKA, Vaclav**
 **46014 Liberec (CZ)**
 • **FOUNE, Frantisek**
 **56206 Usti nad Orlici (CZ)**

(74) Representative: **Musil, Dobroslav**
**Zabrdovicka 801/11**
**615 00 Brno (CZ)**

(56) References cited:
**EP-A2- 0 008 168      EP-A2- 0 522 711**
**EP-A2- 2 468 508      JP-A- 2014 149 275**
**US-A1- 2003 227 627      US-A1- 2007 153 277**

## Description

### Technical field

The invention relates to a method of continuous colour measurement of flat textiles on a measuring machine, in which the textile to be measured is guided along a predetermined path,, whereby the moving textile being measured is at the point of measurement illuminated by diffuse light, which is generated in an integrating sphere from reference light radiated by a source of light, whereby the diffuse light comes out of the integrating sphere through a measuring orifice, whose distance from the textile is maintained constant, and, simultaneously, having passed through the inner space of the integrating sphere, the light being measured which contains diffuse light reflected and scattered off the textile is sensed from the inner surface of the integrator by one channel, whereas the reference light of the source of light is sensed from the inner space of the integrating sphere by the other channel, whereupon the instantaneous spectrum of the reference light is measured as well as the instantaneous spectrum of the measured light merged with the spectrum of the reference light, and from these values the spectrum of the colour of the textile being measured is computed, whereby the translucence of the textile being measured is compensated for by placing a suitable screen under the textile being measured at the point of measuring.

The invention is also related to a measuring machine for carrying out the above-mentioned method, whereby the measuring machine comprises means of moving the textile through the measuring zone, means of stretching the textile and at least one measuring head, movable crosswise to the direction of the motion of the textile and perpendicular to the textile, whereby the measuring head comprises an integrating sphere for generating diffuse light from reference light, provided at the point of measurement with a measuring orifice, whereby the measuring head is mounted on a cross beam and is coupled to means of monitoring and maintaining a constant vertical distance of the measuring orifice of the integrating sphere from the textile during the measurement, the integrating sphere being connected by two luminous conductors to a two-channel simultaneous spectrum analyser, whose outlet is connected to a computer, whereby at the point of measurement there is a screen under the textile to compensate for the translucence of the textile during the measurement process.

### Background art

Most flat textiles are manufactured from primary fibrous raw materials by weaving, knitting or by another method. These so-called grey goods subsequently undergo treatment so as to obtain the required characteristics to fit users' demands, i.e. the appearance, touch and shape stability of the product.

One of the methods of achieving the required appearance of a textile fabric is dyeing. The textile is passed through a dye bath either stretched full width or rolled-up in the so-called "rope form". Both of these methods lead to the uneven dyeing of the whole strip of the textile being treated at a time, which is caused e.g. by unevenly dispersed pigment in the dye bath, by the fact that the dye bath gradually becomes exhausted and by the uneven squeezing of the dyeing liquor from the textile by means of calenders at the outlet of the dyeing machine both in the direction of the width of the textile due to uneven pressure along the nip line of the rollers and along the circumference as a result of the circumferential run-out motion of the squeeze rollers. The chemical reaction of the dye with the material of the flat textile is not completed until the textile is completely dried and, therefore, the rate at which the chemical reaction proceeds differs in different parts of the textile. Uneven distribution of colour throughout the dyed textile - with regard to the demand of the same colour when the dyed samples are compared to one another - is also caused by acceptable weight allowances of individual colour components of the dye bath when the dye bath is re-prepared according to the same recipe, or it is due to the necessity of using another batch of one of the colour components after it is exhausted.

To find out after the completion of the dyeing process whether the prescribed hue and colour uniformity have been obtained, the control of colour distribution of the finished textile is carried out by a knowledgeable expert on inspection machines. Although the control is performed substantially continuously, it is very subjective and makes no guarantee of the exact identification of the colour obtained, or the colour distribution or the colour uniformity. Even if a defect is found and identified by an expert, it does not necessarily mean that it is an actual defect, i.e. that it is out of the tolerance zone, since the expert's assessment is based on upon subjective judgment.

Therefore, subjective assessment of colour is supplemented with measuring colour by means of instruments, which is more objective. This measurement is not continuous, but is performed either by means of a portable manually-operated apparatus in specific areas on a textile which has been stopped, or the measurement is carried out in a laboratory on cut-out samples of the textile in the air-conditioned environment using precision laboratory instruments, which is the most accurate method of measurement, but since it is performed only on the samples removed from the textile, it does not provide comprehensive information about the quality of the colour of the whole textile. Moreover, the results obtained from portable manually-operated apparatuses and those obtained from laboratory instruments are not compatible.

The disadvantage of this common method of the textile colour control is the fact that the whole textile is judged only subjectively. Other drawbacks include the fact that the specific areas on the textile are measured only locally and that the number of the samples, which, however, had to be cut out of the textile and measured in the laboratory, is rather limited. From this follows low labour productivity as well as impossibility of intervention in the technology of the dyeing process in the dyeing machine, since both evaluation and measurement are performed outside the dyeing machine on a product which has already been completed.

The colour of any object perceived by the human eye is a complex result of three factors - of the wave spectrum of the light source illuminating the object, such as the sunlight, bulb, discharge lamp, UV lamp, etc., of absorption capacity, reflectance or the luminescence of the surface of the object depending on the wavelength of the light, whereby these properties are dependent on the material the object is made of, the characteristics of its surface, colour pigments of paints, etc., and, finally, of the sensitivity of the three types of colour receptors of the human eye depending on the wavelength of the light which is reflected off the object and falls on them, i.e. the receptors of red, green and blue. These three functions of the sensitivity of the human eye, dependent on the wavelength of the light, are called CIE colour-matching functions.

Since it is not possible to determine the excitation of the third receptors from the known excitation of any of the two remaining types of the receptors, the values of the CIE colour-matching functions are mutually independent. So as to obtain a match in the perceived colour of an object during repeated observations, the light, the object and the observer must be identical. In order to provide an objective assessment of the object colour and in order to enable construction of an apparatus for instrumental measurements, the light and the observer must be standardized. The standards produced by the international institution "Commission Internationale de l'Eclairage" (CIE) are recognized worlwide.

Instrumental measurement enables to identify the colour of an object by means of three independent numbers X, Y, Z, referred to as trichromatic components, and in this manner define the abstract 3D colour space (X, Y, Z). The conversion into any other colour space coordinates, e.g. (L*, a*, b*), is implemented by an appropriate mathematical transformation. Considering the fact that with a change in the intensity of illumination while maintaining a fixed spectrum, we perceive the colour of an object lighter or darker, but of the same hue, it is customary for colour description to distinguish between lightness L* and hue coordinates a* and b*. The coordinate a* represents the transition from green (negative values) to red (positive values). The coordinate b* represents the transition from blue (negative values) to yellow (positive values). The hue a* = 0, b* = 0 corresponds to achromatic colours, which may have different levels of lightness L*, namely from 0 for ideal black, 50 for neutral grey up to 100 for ideal white. This is how one of the most commonly used colour spaces (L*, a*, b*) is defined and standardized by CIE. The calculation of the overall colour difference between two points of colour space which are distinguished by index 1 and 2 is defined by the following equation:

$$\Delta E^* = \sqrt{(L_2^* - L_1^*)^2 + (a_2^* - a_1^*)^2 + (b_2^* - b_1^*)^2},$$

see the document "CIE 15.3 Colorimetry" (2004).

The basic component of the instruments for measuring colour is a light source which illuminates the object being measured. Besides the spectral properties of the light, it is also important if it creates a bundle of rays spreading from one point to all directions (point light), a bundle of parallel rays (collimated light), or, on the contrary, if it creates light that falls on the illuminated object from all directions (diffuse light). Each of the types of light reacts with the surface of the object being measured in a different manner. Collimated light creates conditions for producing significant specular reflection off the surface being measured. Point and collimated light create conditions for stronger perception of the surface structure of the object by making shadows behind elevated points, thereby colorimetric and appearance parameters are combined. Generally, the most suitable method is illuminating the object being measured with diffuse light, which is especially true for measuring flat textiles. However, the construction of such a light source is considerably more complicated and more expensive. The light reflected off the object is influenced by the colour of the object. The reflected light is guided to an analyzer, where it undergoes a more or less detailed spectral analysis.

There are two fundamental methods of instrumental colour measurement of flat textile materials. The first, the so-called angular method, utilizes a collimated light bundle of a source for directional illumination of a sample of the textile to be measured. The light reflected off the sample is a mixture of specularly reflected light (in accordance with the theory of the angle of reflection being equal to the angle of incidence) and the scattered light. As a rule, it is the scattered reflected light that is analyzed. The angle of directional illumination measured from the normal of the sample surface generally ranges from 30° to 60°, typically 45°, the angle of scanning being typically 0°. The method is then denoted as e.g. 45°/0°. This method is applied, for example, in DE10102607A. Also, the reverse arrangement 0°/45° is used, e.g. in WO2005/108083A1, or various modifications to multi-angle arrangement, such as using more point light or collimated light sources disposed on a circle or multiple circles with different radii situated above one another, which radiate under different angles, see EP1936337B1, EP2637004A1, to obtain illumination approaching diffuse light which is considered the most appropriate.

The second method utilizes a source of diffuse light. The required light diffusion is achieved by bringing light from a light source to a so-called integrator. One of the variants of the integrator is an integrating sphere, i.e. a cavity of spherical shape, whereby the light entering the sphere is perfectly scattered due to multiple reflections of the light off the inner walls covered with a highly reflective coating. As a result, the light coming out of the integrating sphere through an orifice in another part of it and falling on a sample of the textile being measured has homogeneous spectrum and intensity, the sample being illuminated by diffuse light. The diffuse light comes out of the integrator through a measuring orifice which is in contact with the textile being measured which is not moving.

There is one problem that needs to be solved in connection with a light source for the continuous colour measurement of a textile fabric - a sufficiently long service life of the light source. Generally, xenon discharge lamps are used as light sources for laboratory instruments. Their benefit is a very intense electrical discharge exhibiting suitable spectral properties, whose intensity can be controlled electronically so that all the discharges are identical. Nevertheless, the discharge is very short, of the order of microseconds, whereas the time period during which the electrical sources of the xenon discharge lamps are recharged is, in contrast, very long, of the order of seconds, and, as a result, the frequency of manual measuring when using them is so small that virtually it is not necessary to deal with problems of the apparatus being extraordinary heated. A very long period of recharging the electrical sources of the xenon discharge lamp is the reason why it is totally unsuitable for being used directly for continuous measurement. Another reason for this is a short service life of the xenon discharge lamp, namely approximately $10^6$ discharges.

If a xenon discharge lamp is used for manual measuring in a laboratory, the average frequency being 20 measurements an hour during 16 hours/a day, and if it is in operation non-stop for 300 days/a year, the average service life of the xenon discharge lamp is 3125 days, i.e. 10.4 years.

However, in continuous measurement it is necessary to repeat the measurements all the time and utilize the maximum possible frequency of repeating discharges, namely approximately 1/sec, i.e. with a frequency of 3600/an hour, which constitutes the life service of only 17.4 days under the same operating conditions. With a set required distance of two successive measurements on a fabric, a low frequency of repeating discharges is certainly a limiting factor for the maximum allowable speed of the motion of the textile being measured, as well as for the time period of its measurement, and, consequently, for the measurement productivity.

When selecting a light source for continuous measuring of colour, it is therefore possible to use either a switched multispectral (white) LED diode, or known steady-on incandescent light sources, such as the halogen bulb. LED diodes are characterized by high resistence to repeated switching, considerably higher luminous efficiency and an extremely long life service in the order of $10^4$ hours, as compared to that of halogen bulbs - $10^3$ hours. On the other hand, they lack a sufficiently wide spectrum of wavelengths for very precise measurements of colour in the spectrum of visible light (VIS). Also, it has not been known yet how their properties will be changing during their service life, since the white colour of light is obtained by means of coatings on the electrodes containing special luminophores, but these luminophores gradually vapourize. Yet there are special applications in which they are recommended to be used but, at the same time, the requirements for the spectral properties of such a light source are not so high. These applications include, for example, light sources for the optical fibres of medical instruments, such as endoscopes, or those for industrial projection equipment, see US8493564B2. Beside these extremely efficient LED sources, other solutions are being disclosed, which employ sequentially switched individual LEDs having different wavelengths, which constitute a set covering in total the entire required band of wavelengths, see US8149405B2, or a set of LEDs having different wavelengths is used in combination with dichroic filters which constitute a multiedge dichroic beamsplitter, for example according to US8446585B2.

Another alternative uses a limited set of LEDs combined with a plurality of colour standards used for the calibration of the device, as it is described in US5844680A (WO96/09524). In all these solutions which have been mentioned here and which comprise a set of LEDs, the measured colour spectrum is insufficient for measuments with high precision. It is only units or, at the most, tens of sub-bands of the required wavelength band that are measured. However, e.g., in the region of VIS 360 to 760 nm, for the purpose of highly precise colour measurement, it is necessary to measure in sub-bands of wavelengths which are not wider than 1 nm, i.e., to measure at least 400 values. Also, highly efficient LEDs have a long service life conditioned by very effective cooling, and so, when using them, similar technical problems with heating have to be solved as in incandescent light sources.

Another known method is using a combination of a steady halogen bulb and discharges of a xenon arc lamp according to WO96/42010. Each of these sources has a lower luminous output than if it was used separately, which means that in the case of the bulb there are less problems with cooling, while the discharge lamp needs a shorter period of time to be recharged. Both the light sources complement each other spectrally, since the discharge lamp extends the spectrum of the halogen bulb in the region of short wavelengths, whereas the halogen bulb diminishes the relative size of the peak of the spectrum of the xenon discharge lamp.

Special techniques have been developed for measuring the colour of objects with pronounced textured surface, e.g. according to US8441642B2. Here the measurement field is sensed by an image sensor with a large number of image points (pixels), similar to CCD or CMOS sensors of digital cameras or film cameras. The colour of each pixel is analyzed separately. Pixels bearing no information, i.e., points or areas which are too bright or too dark, are excluded from the analysis. In the remaining pixels the inclination of the surface of the object to be measured is analyzed and the colour information is corrected in such a manner as if all the pixels had the same inclination towards the illumination.

One of the major problems of the background art as to the procedure of the colour measurement of flat textiles is the above-mentioned incompatibility of measurement results obtained by different methods. We understand it as the incompatibility of the results of measurements performed by different methods of measurement, i.e. the angle method and the method using an integrating sphere, and the incomparability of the measurement results from portable measuring instruments and from laboratory measuring instruments using the same method of measurement. This discrepancy cannot be removed by calibration with help of standards provided by certification institutions. Portable measuring instruments measure discontinuously.

The angular method is significantly affected by the surface texture of the textile due to the illumination by point light or collimated light bundle and, as a result, it provides different values of lightness L*. At the same time, it generates lower intensity of the reflected scattered light than the illumination by nearly perfect diffuse light from an integrating sphere. As the stability and accuracy of measurement depend on the excitation level of the spectrophotometer analyzers sensors, the accuracy of colour measurement with the integrating sphere is higher.

There is also another cause of the discrepancy between the results of portable and laboratory instruments. Supposedly, portable devices are powered by portable sources of electrical energy, i.e. by batteries and accumulators. The dimensions and weights of the portable devices have to be smaller as well. Therefore, the light sources and the measuring components, e.g. the integrating spheres, are also smaller. The typical size of the integrating sphere of portable devices is 3", whereas in the case of laboratory devices it is 6". Considering the ratio of their inner areas $(6/3)^2$ = 4, the light source of a larger sphere has to have by the same value higher radiation output. A small integrating sphere has a smaller area of the measuring orifice than a large one, namely approximately in the same ratio equal to 4, and thus integrates through a smaller area of the sample of the textile being measured. Nevertheless, the size of the surface structure of the textile being measured remains the same in both cases. There hasn't been known yet any analytical transformation relation that would be able to compensate for this influence in a general case. However, it follows from the nature of both methods that in the case of high-quality diffuse illumination, that is illumination by integrating spheres, the influence of the size of the measurement field of the integrating sphere will be smaller than in the case of change in the size of the measurement field in the angular method.

In order to overcome the above-mentioned shortcomings of the discontinuous methods of colour measurement, attention was paid to developing continuous methods of colour measurement. Considering the length of the textile to be measured, it is always necessary to use a rewinding machine, which rewinds the textile either from a cylindrical package (a roll) to another one, or from a folded pile to a second one, depending on which method of handling the textiles is used in a particular production process. The rewinding machine comprises a controlled drive, ensuring the constant speed of the motion of the textile, and a tension regulatory device to ensure the required size and low fluctuation in the longitudinal tension in the textile at the point of colour measurement, or, if need arises, another device to ensure straightening the textile in the crosswise direction. The rewinding machine also ensures transversal and vertical motion of the measuring heads in relation to the textile being measured, which is necessary for measuring, and the vertical motion of the measuring heads to move them away from the measured textile in order to enable the passage of the seams of a sewn textile and for calibration.

The device for continuous colour measurement may be included in a dyeing line and, with advantage, it may utilize the results of online measurements of colour deviations for controlling the dyeing machine using feedback so that the colour of the textile can be continuously maintained within required limits. Therefore, throughout the whole text of this patent document, including the patent claims, also the part of the dyeing line, namely the part which ensures the functions for colour measurements which have been described in the preceding paragraph for an independent rewinding machine, will be referred to as a rewinding machine.

The second part of the measuring machine is a measuring head, which comprises optical means for the realization of the selected method of measuring, that is a light source, collimators of the light source and of the reflected measured light, an integrating sphere, etc., electrical power supplies, an analyzer of the measured light, ventilators for cooling and mains. As an alternative, the sources of electricity, the analyzer and the ventilators for cooling may be arranged stationarily outside the measuring head and connected to it by means of electrical and optical cables and air hoses. The measuring head either may move crosswise in either direction above the moving fabric (as a result, the track of successive measurements on the fabric has a saw tooth shape), see e.g. EP0889320B1, or the prospectus of the German company Mahlo for the machine Colorscan CIS-12, or the apparatus SpectroEdge of the company Techkon, USA; or there are multiple stationary measuring heads hung crosswise above the fabric wherein the tracks of the measurements are longitudinal parallel line segments on the fabric, and their number equals the number of the measuring heads, e.g. in JPH08015028A (29th June, 1994) or DE10102607A1 (21st Januar, 2001), or see "Automated vision inspection systems increase customer confidence in the textile industry", in: Shelton Vision Systems Ltd, Issue 07/04/2005, 29th September 2004, or EP2394162B1. The advantage of the continuous method of colour measurement of a flat textile is the objective measurement of the whole piece of the textile fabric, although relatively sparsely and on predefined tracks.

The measuring devices for continuous colour measurement, known so far and commercially available, are based on the angular measurement principle, see, e.g., DE10102607A1 with the 45°/0° measuring geometry, or the prospectus of the company Mahlo for the machine Colorscan CIS-12, or the apparatus SpectroEdge of the company Techkon, USA, with the 0°/45° measurement geometry. Their disadvantage is the above-mentioned lower accuracy of measurement. On the other hand, their advantage is simple construction and a relatively low price which results from it, as well as low sensitivity of measurement to a change in the distance of the measuring head from the fabric, which is typically given in centimetres or tens of centimetres.

US 2007/153277 discloses a method of continuous colour measurement of a sample on a measuring machine on which the measured sample, for example consisting of paper, is guided along a predetermined path (at a passline), its surface is illuminated at the point of measurement and its colour is monitored by a sensor for sensing colours, the sensor being coupled to an evaluation device. The sample is illuminated by a focused beam of light or collimated light beam, but can be illuminated by diffuse light from a multi-ported Integrating sphere, or from more sources. The use of diffuse light is not described in detail. For monitoring the colour of paper white and light shades are measured because they have a higher reflectivity and thus provide a higher level of the signal of the analyzer than black and very dark shades, which are common in textiles. Colour measurement of the sample by diffuse light coming out of the integrating sphere is described, e.g., in US2003-0227627, but in this case the measured sample is in contact with the measuring orifice of the integrating sphere and neither the measured sample, nor the integrating sphere are moving.

Known is also a method of continuous measuring, see the reference to JP51-99088A in US7684041B2, wherein the measured textile moves, and upon reaching a preset mark, the textile is stopped and pressed downward to the measuring head, whereupon the colour is measured. This method, however, has low labour productivity. A method for measuring the color of a sample moving in a production line using an integrating sphere, wherein the distance between the sphere and the sample is measured and kept constant, is disclosed in JP2014-149275.

Continuous colour measurement of a fabric is associated with the problem of the translucence of the textile. Flat textiles, especially fabrics, are thin and to some extent translucent. When the textile is illuminated during the measurement process, part of the light passes through the textile. If there is free space under it, the light is not reflected back and the light which has passed through does not contribute to creating the measured scattered light, reflected off the textile. As a result, lower values of the lightness $L^*$ of the colour are measured. If there is a screen under the textile, part of the light is reflected off it and the colour of the screen is blended with the colour of the textile. Therefore, in general terms, a different hue, defined as $a^*$ and $b^*$, is measured, as well as different lightness $L^*$. This problem is currently solved on laboratory instruments by folding the sample cut out of the textile being measured several times, e.g. three times. Another well-known method is using a transparent screen made of polyethylene, as it is disclosed in the patent US3999860, during measuring the colour of paper. When the screen is used for measuring a flat textile, the light which has passed directly through the screen without interacting with the textile is scattered in the screen, and so is the light reflected off the textile. The light reflected off the screen back above the textile will have a colour hue similar to the hue of the textile. Due to the low abrasion resistance of polyethylene this method cannot be used for continuous colour measurement of a textile. Since it is the colour of one side of the textile that is measured and the polyethyelene screen assumes the colour of the other side of the textile, this method cannot be used in cases when the front and reverse sides of the textile differ in colour, e.g. in prints. Another well-known method of correcting the translucence of the material is carrying out repeated measurements of the same point with two screens having different, but known reflectances. For conversion, the computing correction according to Kubelka-Munk theory of reflectance, see, e.g. Wyszecki, G., Stiles, W. S.: "Color Science: Concepts and Methods, Quantitative Data and Formulae", John Wiley and Sons, New York, 1982, sec. ed. 2000. Generally, the measurement is made against the background of a white and black screen, formed directly by the surfaces of colour standards (reference tiles), or e.g. by colour coatings, which are metrologically related to these colour standards. These methods are protected for manufacturing paper, e.g., WO 96/42010, or the patent US3936189 protects the utilization of a light trap instead of a black screen, which simulates a surface with minimum reflectivity. Another method protected by the patent EP0181155A2 is measuring the colour of paper provided with a backing consisting of a plurality of layers of the standard product, which is paper of the required colour hue, simulating the measuring of endlessly thick material in the same manner as it is customary to perceive the colour of the transparent paper by the user. These multi-layer backings, which represent the prevailing part of the production of the producer, are arranged in an eight-fold revolver turret, which can be turned to a desired position by a stepping motor.

Another problem associated with continuous colour measurement of flat textiles is the calibration of the measuring head or multiple measuring heads. In portable or laboratory apparatuses it is performed manually several times a day by placing a white, black and control reference tile successively to the measuring orifice of the apparatus. Optionally, this procedure may be used for continuous measurement using one measuring head moving crosswise above the textile. However, this is a serious problem in the case of multiple measuring heads, since manual calibration would be extremely laborious and time-consuming. Therefore, calibration must be performed automatically. It is possible to install a set of reference tiles in each measuring head, placed in a sliding or rotating holder, but considering the price of the reference tiles and the fact that new reference tiles will have to be purchased every year, this concept involves high annual operating costs for the user of the device. For this reason, it is more advantageous to use one set of reference tiles, which is shared by all the measuring heads. Known are methods, wherein calibration means are mounted in the measuring head, see, e.g., EP1642098B1, or wherein calibration means are moved by a linear motor to multiple stationary measuring heads, such as JPH08015018A.

**Principle of the invention**

The invention is defined by the independent claims.

The principle of the method of continuous colour measurement of a textile according to the invention consists in that the distance of the measuring orifice of the integrating sphere from the surface of the moving textile is maintained in the range of $1 \pm 0,05$ mm. The method improves the quality of continuous colour measurement of the textile so that it is comparable to laboratory measurement, by which means the whole process of measuring becomes cheaper and, moreover, it enables feedback to control the dyeing process if the method is applied in the dyeing line.

In order to obtain results corresponding to the laboratory results, it is advantageous if before starting the continuous measuring process on the moving textile, the first colour measurement is performed on the textile which has been stopped during the contact of the measuring orifice of the integrating sphere with the textile and the second measurement is made at the same point above the textile at a nominal distance $1 \pm 0,02$ mm of the measuring orifice from the textile which has remained stopped, whereby both the results of the measurements are used to determine a corrective coefficient for the following continuous measurements. By using the corrective coefficient, the colour measured at the nominal distance of the measuring orifice from the textile is recalculated to the colour of the same point of the textile as if it would have been measured in contact of the measuring orifice with the textile and at the same time the extraneous radiation entering the measuring orifice is eliminated.

So as to maintain the quality of measurement, it is favourable if the procedure of stopping the textile and measuring the colour during the contact of the measuring orifice with the textile and the colour measurement at the same point at a nominal distance of $1 \pm 0,02$ mm of the measuring orifice from the stopped textile is repeated at selected time or length intervals.

For the purpose of storing the data about the detected colour of the textile, the computed spectrum of the colour of the textile being measured is assigned to a particular point on the textile where the measurement was made, and the spectrum of the colour of the textile being measured together with the assigned point of the textile are stored in the memory and/or are displayed and/or are used for feedback control of the dyeing process.

In one specific advantagous embodiment, the integrator is an integrating sphere, which is provided at the point of measurement above the textile with a measuring orifice for the passage of diffuse light in both directions. In addition, it is advantageous if the dimensions of the integrating sphere are the same as those of the integrating sphere of an apparatus used (for the purpose of comparison) in the laboratory, that is usually 6", because then it is possible to compare the results of continuous measurements with those of laboratory discontinuous measurements.

If it is necessary - for whatever reasons - to rewind the textile being measured back onto the original package or put it back to the folds, it is advantageous to carry out the colour measurements also during the reverse motion of the textile, whereby the integrating sphere is situated in a different position relative to the width of the textile, which means that a different part of the textile is measured.

In order to obtain more accurate results of measurement, it is favourable, when performing all the above-mentioned measurements, if at least two integrators, arranged in different areas of the textile being measured, are employed. Hence, those skilled in the art will use such a number of integrators that will ensure the required accuracy of measurement.

The principle of the measuring machine acording to the invention consists in that. the distance of the measuring orifice of the integrating sphere from the moving textile is $1 \pm 0,05$ mm, whereby under the textile at the point of measurement there is at least one layer of the same textile or a layer of grey achromatic colour, which by its lightness is identical or nearly identical to the lightness of the textile being measured.

In a preferred embodiment, the integrator is composed of an integrating sphere, whereby the diameter of the integrating sphere in the preferred embodiment is 6".

It is advantageous, especially for the textiles with a different colour of the face side and the reverse side, if the layer used as a screen under the textile at the point of measurement is composed of a cylindrical package on a roll, which, ideally, the textile touches or passes tangentially above it.

In another alternative embodiment, the layer/layers used as a screen/screens under the textile being measured is/are composed of the measured textile which, having passed through the point of measurement, is guided in the reverse direction. This embodiment cannot be used for textiles with a different colour of the face and reverse sides.

For textiles which have been produced and stored in folds the layer/layers used as a screen under the textile being measured are formed by the end of the textile, whereby the beginning of the textile is inserted in the feeding device and guided through the measuring place to a depositing place, where it is wound on a winding roller or placed in folds as required.

For monitoring the distance of the measuring orifice from the textile and maintaining it constant, the measuring head is mounted on a movable member, which is displaceably in a vertical direction mounted on a vertical linear guide system, which is mounted on a cross beam, whereby the movable member is coupled to a drive whose control circuit includes a sensor of the distance of the measuring orifice of the integrating sphere from the textile, capable of maintaining constant distance of the measuring orifice of the integrating sphere in the range of $1 \pm 0,05$ mm.

To ensure the transverse motion of the measuring head in cases when tzhe machine comprises at least two heads, the movable member with the measuring head is adjustably mounted on a cross beam in a crosswise direction, whereby it is adjustable in the crosswise direction outside the width of the textile, where a magazine of reference tiles is arranged, and the measuring orifice of the integrating sphere is able to occupy a position above the reference tile, approach it and get into contact with it, whereupon after calibration the movable member is able to move to a parking position and release the space over the reference tiles for the next measuring head.

## Description of drawings

The invention will be described hereinafter with the aid of the enclosed drawings, where Fig. 1 represents a block scheme of a measuring machine, Fig. 2 shows a block scheme of a measuring head, Fig. 3 shows the winding of a textile on a cylindrical package, which is used as a screen under the textile at the point of measurement, Fig. 4 represents the winding of a textile on a cylindrical package driven by a pair of rollers, Fig. 5a, 5b, 5c show various options of guiding the textile at the point of measurement, Fig. 6 a multi-folded inner end of the textile under the point of measurement, whereby the textile is stored in folds in a tub of a rewinding machine, Fig. 6b shows storing the textile in folds on a carriage in the shape of a stand, Fig. 6c storing the textile on a flat carriage, Fig. 7 a screen under the textile consisting of multiple layers at the point of measurement formed by a cutting of the textile wrapped around a board or frame, Fig. 8a, 8b show the mounting of the measuring head on a cross beam with a drive by means of a rack and pinion, in Fig. 9a, 9b there is a mounting of the measuring head on a cross beam with a drive by means of a toothed belt, in Fig. 10a, 10b an arrangement for transferring reference tiles.

## Examples of embodiment

The measuring machine **1** for the continuous colour measurement of flat textiles comprises a rewinding machine **2,** on which are adjustably mounted measuring heads **3** which are for mutual exchange of information connected to a rewinding machine **2** and to a control and evaluating computer **4** which is for mutual exchange of information simultaneously connected to the rewinding machine **2,** whereby in an advantageous unillustrated embodiment the computer **4** and a control unit of a dyeing machine are interconnected, and so it is possible to influence the dyeing process itself according to the results of the colour measurements of the resultant textile.

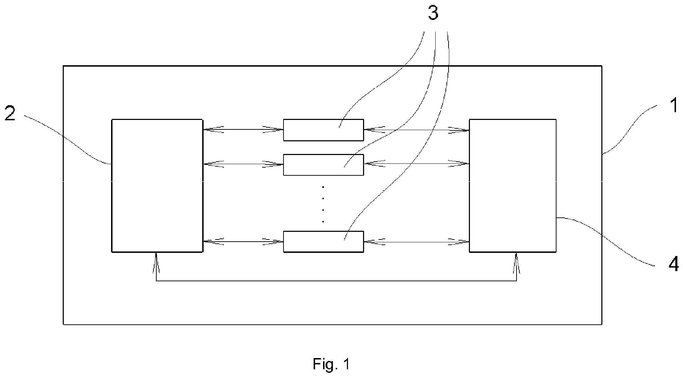

As it is apparent from Fig. 1, the measuring machine **1** may comprise one measuring head **3** which moves crosswise to the textile, whereby in an advantageous embodiment it is a reversible periodical motion, or it is possible to use multiple measuring heads **3** which either measure the textile on multiple tracks parallel to the edge of the textile, or they move in the crosswise direction to the textile, preferably in a reversible periodical manner.

The measuring head **3** represents a sensor for measuring and basic spectral analysis of the measured colour hue. The measuring head **3** comprises a source of diffuse scattered light generated by an integrator, which could be, for example, an integrator of a "cylinder and funnel type" in which the illumination is realized by adding milk-colour glass inside the cylinder and the funnel is usually made of anodized aluminium, or it is possible to utilize a hemisphere integrator, which is made up of a discrete or continuous system of reflective surfaces ensuring a multi-directional illumination. Ideally, the integrator is composed of a hemisphere ensuring illumination from any point of the surface above the sample. The diameter of the hemisphere determines the intensity of the incident light.

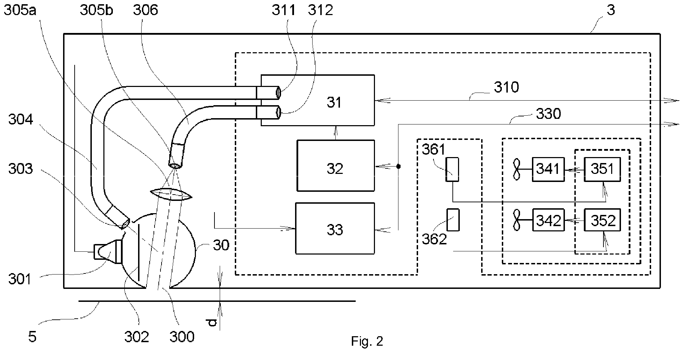

In the invention, an embodiment of which is shown in Fig. 2, the integrator is an integrating sphere **30**. In the measuring head **3** according to an embodiment of the invention the integrating sphere **30** having a diameter of 6" is used, which is the same diameter as it is used in laboratory instruments.

The integrating sphere **30** is connected with a source **301** of light, formed in the example of embodiment by a halogen bulb and correction filters to limit UV and IR radiation and adjust the colour temperature of the light to 6500 °K. The light is radiated from the source into the inner space of the integrating sphere **30,** restricted by an opaque shade **302,** from which it is partially reflected as reference light to the inlet collimator **303** of the luminous conductor **304** of reference light. The light which bypasses the shade **302** generates as a result of the reflection off the walls of the integrating sphere **30** diffusely scattered light which passes through the measuring orifice **300** in the integrating sphere **30** and falls on the surface of the textile being measured **5,** by which it is partially absorbed and partially is reflected and diffused, thus creating the measured light. This measured light is after passing through the space of the integrating sphere collected and focused by a collimator **305a** into the inlet collimator **305b** of the luminous conductor **306** of the light being measured. Both the luminous conductors **304, 306** are guided into a two-channel simultaneous spectrum analyzer **31,** in which the luminous conductor **304** of the reference light is terminated by an outlet collimator **311** of the reference light and the luminous conductor **306** of the measured light is terminated by an outlet collimator **312** of the measured light. The two-channel simultaneous spectrum analyzer **31** is provided with known unillustrated diffraction grids and slots, suitable for the selected region of wavelengths of light and is powered from a stabilized power supply **32** of the analyzer. The outlet **310** of the spectrum analyzer is in a well-known manner connected to an unillustrated computer. Using a spectrally identical source of light and the same size of the integrating sphere as in laboratory instruments enables comparison of the results of the continuous measurements with the results of the laboratory measurements.

Two-channel simultaneous measurement involves the simultaneous measuring of, firstly, the instantaneous spectrum of the reference light of the source **301** of light brought to the spectrum analyzer **31** by the luminous conductor **304,** and, secondly, the instantaneous spectrum of the reference light of the source **301** merged with the spectrum of the measured light which is reflected and scattered off the textile **5** being measured and brought to the spectrum analyzer **31** by a luminous conductor **306** of the measured light. On the basis of both these spectra, the spectrum of the colour of the textile being measured is computed. Also, in this manner the instantaneous fluctuation of the spectrum of the light source is compensated for.

For the accuracy of measurements, a small distance of the measuring orifice **300** of the integrating sphere **30** from the textile **5** is essential, the distance being maintained constant, usually given in units of millimetre, hereinafter being referred to as a nominal measuring distance. In the invention, the nominal measuring distance is equal to 1 mm. The small distance of the measuring orifice **300** from the textile **5** decreases the intensity of the light illuminating the textile minimally and prevents the unwanted ambient light from entering the integrating sphere **30.** Achieving the desired accuracy of measurements also requires a small allowable variation in the distance of the measuring orifice **300** from the textile **5,** which in the example of embodiment equals $\pm$ 0.05 mm. So as to ensure such a high accuracy of the distance, the measuring head is provided with an unillustrated laser sensor of the distance, which continuously measures the distance of the measuring orifice **300** from the textile **5** and provides information to the control circuit. To achieve further restriction of the influence of the ambient light, the measuring head **3** may be provided with an unillustrated shade, located concentrically with the measuring orifice **300** of the integrating sphere **30.**

The source **301** of the light of the integrating sphere **30** is supplied with power from a stabilized power supply **33.** The power supplies **32** and **33** are connected in a known manner by means of a conductor **330** to an unillustrated source of electrical current.

The measuring head **3** is equipped with two independent cooling circuits with ventilators **34,** which are powered by stabilized supplies **35,** which are connected to thermometers **36** placed in defined positions of the measuring head **3**. The first cooling circuit serves to cool the halogen bulb of the source **301** of light of the integrating sphere **30** and is composed of a ventilator **341,** a stabilized power supply **351** and a thermometer **361** arranged in the vicinity of the halogen bulb. The second cooling circuit is made up of a ventilator **342,** a stabilized power supply **352** and a thermometer **362** arranged in a different area of the measuring head **3,** in which it is necessary to measure the temperature, e.g., in the space of the spectrum analyzer or in the space where electronics is installed. In Fig. 2 the system of measuring temperatures and cooling is represented only schematically, whereby for those skilled in the art it is common practice to place the thermometer in an appropriate position and to bring the cooling air into the same place or another place as needed. The regulation of the cooling process is carried out by changing the revolutions of the ventilators. In an advantagous unillustrated embodiment, part of the cooling air is diverted, passes through the integrating sphere **30** and reduces the depositing of the textile dust in the inner space of the integrating sphere **30,** thus, in the long run, maintaining a constant luminous intensity of the integrating sphere **30.**

The spectrum analyzer **31** and/or power supplies **32, 33** and/or ventilators **34** of cooling may be located stationarily in a box on a rewinding machine and connected to a measuring head by electrical and optical cables and hoses. In Fig. 2 there are options of dividing stationary sections from the measuring section of the measuring head **3,** indicated by the dashed lines.

In an unillustrated embodiment, ventilators **34** may be replaced by compressed air cooling system connected to the central mains of the compressed air on the shop floor via a unit of filtration and air treatment and, should need arise, of reduction of the pressure, which can be regulated depending on the temperatures in the parts of the measuring head in which the thermometers **36** are located.

The rewinding machine **2** ensures mutual coordination of the measuring head **3** and the textile being measured **5.** This means that it ensures the motion of the textile being measured **5** in a longitudinal direction, measuring of the relative position of the measuring head **3** with respect to the beginning of the textile being measured, placing and transferrring the measuring head/measuring heads **3** in relation to the edges of the textile **5** in a crosswise direction to reach the measuring position or the calibration position, ensures reaching and maintaining the distance of the measuring head/measuring heads **3** and its/their acceptable allowances from the textile **5,** moving the measuring head/measuring heads **3** from the textile **5** during the passage of the seam of textiles sewn together, as well as electronic identification of individual pieces of sewn textiles **5** and the identification of the position of the measuring head/measuring heads **3** in relation to the surface of the textile **5.**

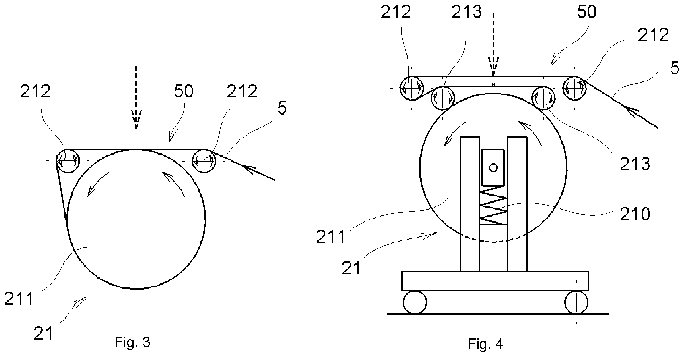

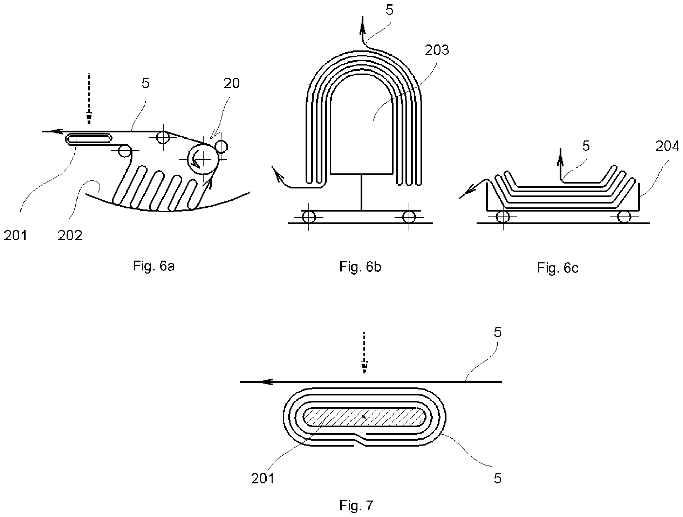

The rewinding machine **2** comprises means of moving textile **5** through the measuring zone. The textile **5** is at the inlet of the rewinding machine **2** either wound on a cylindrical package, which is either coupled to an unillustrated drive or it is connected with a known unillustrated draw-off device of the textile **5,** or the textile **5** is multi-folded and is fed to the rewinding machine **2** by a feeding device **20,** as is shown in Fig. 6a. At the outlet of the rewinding machine **2** a winding device **21** is arranged, in which the textile is wound on a cylindrical package **211,** as is shown in Fig. 3 and 4, or an unillustrated draw-off device and folding device. The tension of the textile **5** required for measuring is ensured in a well-known manner by regulating the speed of the process of unwinding or drawing-off the textile **5** and by regulating the speed of the process of winding or drawing-off. If needed, the rewinding machine **2** may be equipped with well-known means of stretching the textile **5** in a crosswise direction. The rewinding machine **2** is further provided with means of measuring the distance of the point of measurement measured on the textile **5** from the beginning of the textile **5,** or from another predetermined point on the textile which enables to associate a particular colour value obtained by measuring with a particular point on the textile **5.**

The sensor of the distance of the measuring head **3** from the textile being measured **5** is connected to the control circuit of the vertical motion of the measuring head **3,** by which means a constant distance of the measuring orifice **300** of the integrating sphere **30** of the measuring head **3** from the textile **5,** typically 1 ± 0,05 mm, is maintained. At the same time, by controlling the distance of the measuring head **3,** the circumferential run-out of the cylindrical package **211** is eliminated during measuring with the measuring head located above the point of the contact of the textile being measured **5** with the cylindrical package **211,** as it is shown in Fig. 3.

If the textile to be measured **5** is or may be sewn from several pieces of fabric, another sensor of the distance of the textile **5** is arranged on the rewinding machine **2** in front of the measuring head **3** in a defined distance, which is able to discover in advance the passage of the seam and its thickness and gives a signal to shift the measuring head **3** temporarily from the textile **5** and after the passage of the seam it gives a signal to move it back to reach the measuring distance. The position of the seam is stored in the memory of the computer **4**.

In some cases the rewinding of the textile **5** in the reversed order is carried out after the measurement is completed. This may be used for measuring in the opposite direction, and if the measuring head/heads **3** is/are placed to a different position in relation to the textile **5,** it contributes to obtaining more accurate results of measurement or it results in reducing the number of measuring heads **3** by half. During the reversed rewinding, the position of the seam is known and therefore it is not necessary to use another sensor located in the opposite direction.

Moving the measuring head **3** away from the textile due to the passage of the seam and/or the colour of the sewing thread of the seam itself leave distinct tracks in the colour signal which can be used to identify reliably the end of the previous and the beginning of the next piece of the textile **5**. If the beginning of the piece of the textile is provided with a suitable electronically detectable identification label and if the rewinding machine is equipped with a corresponding reading device, it is possible to detect automatically which piece of the textile is being measured. The label may also convey information encoded in various ways, e.g. as a bar code, QR code, colour code, or electronic code, it may be printed, e.g., or it may be in the form of an electronic card or chip.

As already stated in the chapter describing the background art, the problem of the translucence of the textile **5** when measured is solved by its multiple folding under the point of measurement. In the example of embodiment according to Fig. 3, the textile **5** being measured is guided in the measuring place along the circumference of the cylindrical package **211** in the winding device **21** so that it is supported and screened by the package **211**. The direction and the place of measurement are in the following drawings indicated by a dashed arrow. The textile **5** is in a known manner unwound from the cylindrical package or withdrawn from folders and is guided in front of the winding roller **211** of the winding device **21** through a pair of guide rollers **212,** whose axes are parallel to the axis of the winding roll **211**. The guide rollers **212** are mounted adjustable in relation to the axis of the winding roller **211** in a perpendicular direction to the plane **50** of measurement, whereby the guide rollers **212** or the winding roller **211** may be mounted adjustable. To avoid oscillation of the textile **5** at the point of measurement, the plane **50** of measurement is tangent to the surface of the cylindrical package **211,** whereby the speed of the motion of the textile **5** and the speed of the circumference of the cylindrical package **211** is almost the same and has the same sense, the difference in speed being negligible. Although in practice bending of the textile **5** on the circumference of the cylindrical package **211** at the point of measurement may occur, it is necessary, however, to maintain the bending is as small as possible. Nevertheless, measuring the colour of the textile **5** above the cylindrical package **211** has its limitations. The first one consists in that measuring cannot be started unless at least one layer of the textile being measured **5** is wound on the cylindrical package **211,** preferably, though, two layers. Therefore, it is not possible to start measuring from the very beginning of the textile **5.** The second one is similar and it applies to the textiles that have been sewn together, wherein measurement can be started after the seam passes through the first, preferably the second layer of the package behind the measuring field of the integrating sphere **30.** Consequently, apart from the position of the seam, it is necessary to know also the current diameter of the package **211.** This type of screen can be also used for textiles whose face and reverse sides differ in colour.

Another alternative of the arrangement of multiple layers of a textile under the point of measurement is represented in Fig. 4. The textile **5** is guided reversedly via two pairs of guide rollers arranged above the cylindrical package **211** of the winding device **21.** The pair of inner guide rollers **213** is coupled to a known unillustrated drive and touches the surface of the cylindrical package **211** and is used to drive it. The outer pair of the winding rollers **212** is arranged in a greater distance from the surface of the package **211** and their upper tangential plane **50** is perpendicular to the direction of measurement and is above the upper tangential plane of the inner pair of the guide rollers **213.** The textile **5** is guided onto the first of the outer pair of the guide rollers **212,** from which it is guided onto the second of the outer pair of the guide rollers **212,** which is wrapped by it and passes to the upper portion of the first of the pair of the inner guide rollers **213,** from which it is guided onto the second of the pair of the inner guide rollers **213,** which is also wrapped by it, whereupon the textile **5** is guided in the direction opposite to the direction of its motion between the pair of the inner guide rollers **213** and is wound on the cylindrical package **211.** The cylindrical package **211** is pushed to the guide rollers **213** of the inner pair by the force of compression springs **210,** as is illustrated in Fig. 4. This arrangement cannot be used for textile materials **5** whose face and reverse sides differ in colour

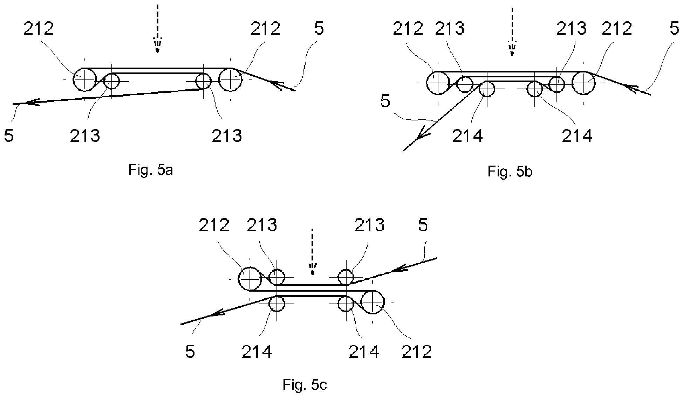

The arrangement of multiple layers of the textile under the point of measurement according to Fig. 5a comprises also a pair of outer guide rollers **212** and a pair of inner guide rollers **213,** unlike the embodiment according to Fig. 4 however the inner guide rollers **213** do not contact the cylindrical package **211** and the textile **5** is guided from the second inner guide roller **213** to be wound or folded outside the space of the guide rollers **212, 213.**

According to Fig. 5b, the embodiment according to Fig. 5a comprises an additional pair of auxiliary inner guide rollers **214.** The textile, having wrapped the second of the pair of the inner guide rollers **213,** passes to the first of the pair of auxiliary inner guide rollers **214,** from which it continues onto the second, from which it is guided to be wound or folded outside the space of the guide rollers **212, 213, 214.**

In the embodiment according to Fig. 5c, the pair of the inner guide rollers **213** is arranged between and above the outer guide rollers of the pair **212,** whereas the pair of the auxiliary inner guide rollers **214** is arranged between and under the outer guide rollers of the pair **212.** The textile is guided under the first and second roller of the pair of the inner guide rollers **213,** from the second roller **213** the textile **5** passes to the first roller of the pair of the outer rollers **212,** from which it continues onto the second outer guide roller **212.** After that the textile **5** returns and passes across the upper portions of the pair of the auxiliary inner guide rollers **214,** from which it is guided to be wound or folded outside the space of the guide rollers **212, 213, 214.** None of the arrangements according to Fig. 5a-c is suitable for textiles with a different colour of the face and reverse sides.

Another possibility of creating multiple layers of the textile **5,** which can be with advantage used for the textiles stored in folds, is winding the end of the textile on a board **201** or a flat frame and place it under the point of measurement. In this variant, substantially any number of layers of this textile can be under the textile being measured **5** without having technical problems with the guide rollers used in the preceding embodiments. The folds of textile **5** to be measuredare are placed in a tub **202,** as is illustrated in Fig. 6a, or on a depositing stand **203,** represented in Fig. 6b, or on a flat carriage **204** with low sidewalls, as is shown in Fig. 6c, or on another known suitable means, from which the textile **5** is withdrawn by a feeding device **20** and is fed to the measuring place above the layers of the textile **5** wound on the board **201** or the frame and is further guided to a known depositing place, such as a winding device, where it is wound on a winding roller or a folding device, on which it is folded. In all of these embodiments, it is advantageous that when the textile is stored folded, both the beginning and the end of the fabric are available at the same time.

In the example of embodiment in Fig. 7, under the textile **5** to be measured there are several layers of a strip cut off the same textile **5** wound on the board **201** or the frame. The textile **5** of the cut-off strip is wound onto the board **201** or the frame in such a manner that on the surface there is the same side of the textile that is being measured that is face-face or reverse side-reverse side. The board **201** or the frame with the cut-off strip of the textile **5** are put into the rewinding machine so that on the occurrence of an accidental contact of the textile being measured **5** with the textile wound on the board **201** or the frame, the package on the board **201** or on the frame would be tightened, not rolled up. The board **201** is replaceable, boards **201** with wound samples can be archived for case repeated production is measured. This solution is independent of the method of feeding and withdrawing the textile being measured **5.** In all the illustrated examples the direction and place of measurement are indicated by a dashed arrow.

In an unillustrated embodiment, the screen used under the textile being measured at the point of measurement is in various precisely defined colours, preferably in the grey spectrally neutral colour, whose spectrum has a constant reflectivity for all wavelengths in the domain of the measured light. Consequently, the screen affects only the component of the lightness $L^*$ and does not influence the colour components of the hue $a^*$ and $b^*$. The measurement is more accurate, since the screen does not affect the two most important components of the three components of colour, and so the correction calculation is easier and faster. The closer the hue of the grey colour of the screen to the hue of the colour of the textile **5** being measured, converted into black and white, i.e. the closer the lightness $L^*$ of the screen to the lightness $L^*$ of the textile measured, the smaller the deviation of the measured lightness $L^*$. In an advantagous embodiment, the screens having a different degree of lightness of neutral grey can be changed as needed. Also, they may be arranged on a sliding magazine or revolving magazine or in any other suitable manner.

As has been already mentioned, the measuring heads **3** are mounted adjustably crosswise to the direction of the textile being measured **5** and in a perpendicular direction to the textile being measured **5.**

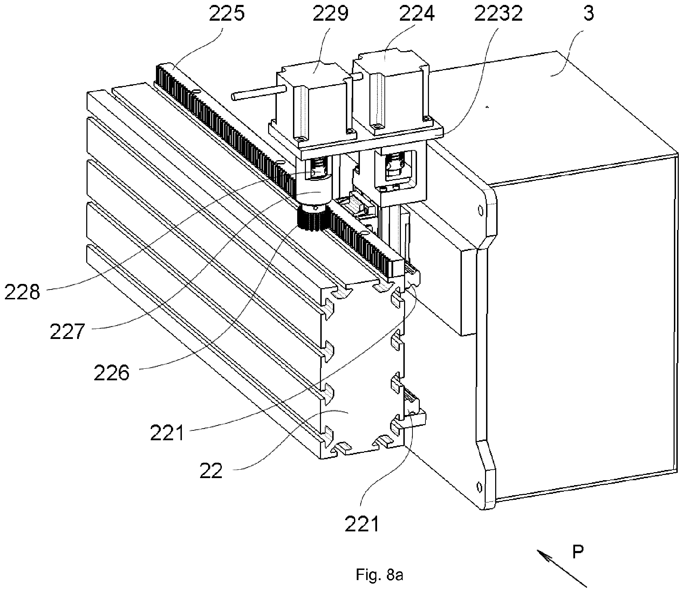

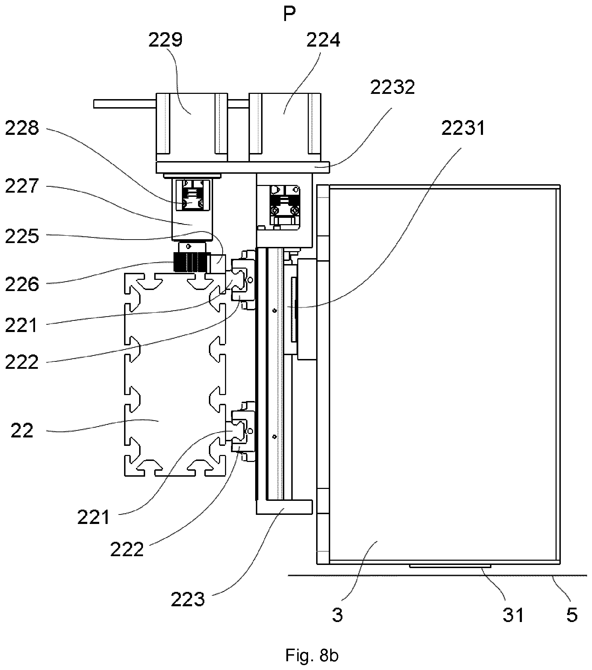

In the example of embodiment according to Fig. 8a, b, the measuring head **3** is mounted on a movable member **2231,** which is adjustably mounted on a vertical linear guide system **223,** and coupled to a drive, which is in the illustrated embodiment composed of a stepping motor **224** for providing a vertical movement of the measuring head **3,** that is its movement towards the textile **5** being measured and away from it. In order to control the stepping motor **224** for providing the vertical movement of the measuring head **3,** a known control circuit is used (not shown), in which is included an unillustrated sensor of the distance of the measuring orifice **300** of the measuring head from the textile **5** which is usually arranged on the measuring head **3**.

The stepping motor **224** for providing the vertical movement of the measuring head **3** is mounted on the vertical linear guide system **223,** on which a bracket **2232** is also firmly mounted. The vertical linear guide system **223** is provided with carriages **222,** which are adjustably mounted on the rails **221** of a cross beam **22,** which is mounted on the rewinding machine **2** crosswise to the direction of the motion of the textile **5** being measured. On the cross beam **22** there is mounted a rack **225**, to which a pinion **226** is coupled, which is mounted in a bearing countershaft **227** and coupled by means of a flexible coupling **228** with the stepping motor **229** of the transverse drive of the measuring head **3**. The stepping motor **229** of the transverse motion of the measuring head **3** is mounted on the bracket **2232,** which is mounted on the vertical linear guide system **223,** thus being coupled to the measuring **head 3.** If there is no electricity supply in the stepping motor **229,** it ensures a steady position of the measuring head **3** in the crosswise direction. If the stepping motor **229** is supplied with current, the motor **229** starts to rotate and the measuring head **3** is shifted in the crowise direction. If there are more measuring heads **3,** each of them is coupled with one stepping motor **229** of the transverse motion of the measuring head. It is possible to move all the measuring heads **3** at the same time or just the selected ones. Placing more measuring heads **3** on a common cross beam **22** does not allow the heads to pass one another and swap their positions.

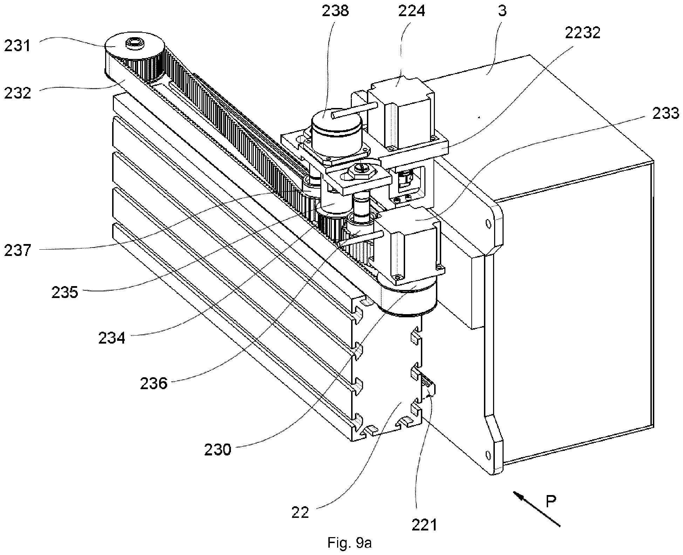

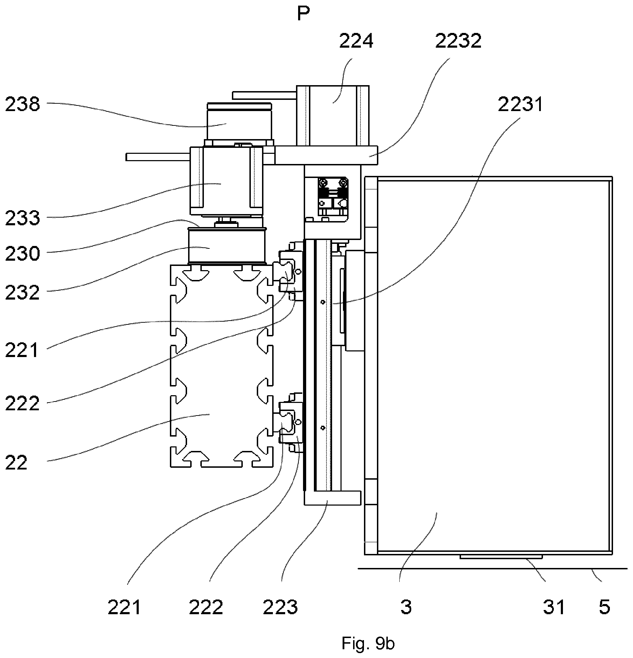

Another example of embodiment of the arrangement of the measuring head **3** on a rewinding machine **2** is shown in Fig. 9a, b. The measuring head **3** is mounted on a cross beam **22** in the same way as in the embodiment according to Fig. 8a, b. The means of moving the measuring head **3** along the cross beam **22** are different. On the edges of the cross beam **22** is mounted a driving pulley **230** and a reversible pulley **231**, which are wrapped by a toothed belt **232.** The driving pulley **230** is coupled to a stepping motor **233** of the transverse drive of the measuring head **3,** which is common to all the measuring heads **3** arranged on the same cross beam **22.** Each measuring head **3** is coupled wih a pulley **234** of the transverse drive of the measuring head **3,** which is wrapped by a toothed belt **232.** The wrapping of the pulley **234** is increased by means of a guide roller **236** and a guide roller **237,** which are mounted on the smooth side of the toothed belt **232** on both sides of the pulley **234** and whose pivots are rotatably mounted in a bracket **2232.** At the opposite end of the countershaft **235** of the pulley **234** of the transverse drive of the measuring head **3** there is an electromagnetic coupling **238** mounted, which is by its stationary portion mounted on the bracket **2232.** If the electromagnetic coupling **238** is in not switched condition and the stepping motor **233** of the drive pulley **230** rotates, the toothed belt **232** moves, turning the belt pulley **234,** which rotates freely in the coupling **238,** whereas the measuring head **3** does not move in the crosswise direction. As soon as the coupling **238** is connected, the measuring head **3** starts moving crosswise along the cross beam **22.** In this embodiment it is possible to move the measuring heads **3,** mounted on the cross beam **22,** by one stepping motor **233** - either all of them, or selectively. In this embodiment, too, the measuring heads **3** cannot exchange their positions.

Using the method of measuring according to one embodiment of the invention, prior to the beginning of continuous measurement, initial measurement of colour is performed on the textile **5** which has been stopped during the contact of the measuring orifice **300** of the integrating sphere **30** of the measuring head **3** with the textile **5,** which is a method corresponding to the laboratory measurement methods, and a second measurement above the textile **5** which has been stopped at a working, i.e. nominal distance of the measuring orifice **300** of the integrating sphere **30** from the textile, namely typically 1 mm, with a reduced tolerance ± 0.02 of mm. From the results of both measurements, correction relations for the mutual conversion of the measured values are determined. These correction relations are afterwards used also for the conversion of the measurement results above the moving textile **5** to values which would correspond to the measurement at the point of the contact of the measuring orifice **300** with the textile **5** on the textile which has been stopped. This is made possible by the fact that the influence of the speed of the moving textile **5** on the results of colour measurements is negligible, as well as a change in the working distance of the measuring head **3** from the textile of ± 0.05 mm. This method of determining the correction involves also the elimination of the influence of the ambient light which has penetrated through the gap between the textile **5** and the edge of the measuring orifice **300** into the integrating sphere **30.** At the same time, it is possible and also advisable to carry out the measurements and the calculation of the correction relations whenever a significant change in the ambient light occurs, e.g. with the illumination by the daylight in the morning, at noon, in the evening, at the moment of the electrical lighting being switched on and off, etc. That means that the measurements are repeated at selected time or length intervals.

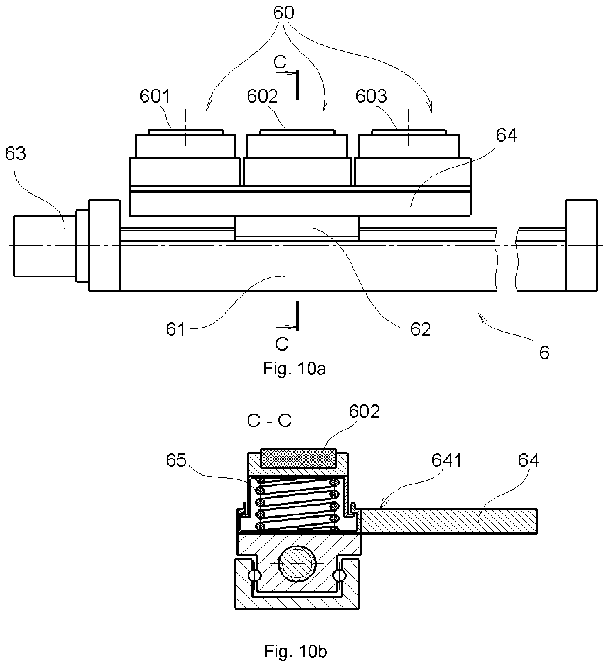

So as to achieve quality of measurements using the method according to the invention, it is necessary to carry out the calibration of the measuring chain of the colour measurement. A magazine **6** of reference tiles **60,** illustrated in Fig. 10 a, b, is mounted outside of the maximum width of the textile **5** being measured on the rewinding machine. The magazine **6** of reference tiles comprises a linear guide system **61,** on which a slider **62** is mounted, coupled to a stepping motor **63.** On the slider **62** a reference board **64** and a system of reference tiles **60** are mounted, composed in the illustrated embodiment of a white reference tile **601,** black reference tile **602** and a control reference tile **603**. The upper surface of the reference board **64** constitutes a reference plane **641** for an unillustrated sensor of the distance of the measuring orifice **300** of the measuring head **3,** which is used both for monitoring the distance from the textile **5,** and for monitoring the distance from the reference tiles **60.** The reference tiles **60** are mounted on springs **65.** The system of reference tiles **60** may be supplemented with additional reference tiles which are required. The linear guide system of the reference tiles is mounted parallel to the direction of the motion of the textile **5.**

During calibration, the measuring head **3** is moved above a respective reference tile **60** and by its measuring orifice **300** gets into contact with the reference tile **60.** The replacement of the reference tiles **60** under the measuring head **3** is carried out after lifting the measuring head **3** by moving a slider **62** along the linear guide system **61.** If the rewinding machine **2** comprises more than one measuring head **3,** the measuring head **3** moves after the calibration to a parking position outside the textile and outside the space of calibration, thus making way for the next measuring head **3** above the reference tiles **60.**

Due to the flexible mounting of the reference tiles **60** there is no risk of damaging the reference tiles **60** or the measuring head **3** upon the contact of the reference tiles **60** and the measuring head **3.** After all the measuring heads **3** have taken turns in occupying the calibration position, the measuring heads **3** resume their original positions or get into new preselected positions in relation to the edge of the textile **5.**

Standard reference tiles can be purchased also with calibration values and a certificate of metrological compatibility. Instead of standard reference tiles for calibration it is possible to use any suitable colour samples of sufficient colour stability, metrologically linked to the standards by the user. The black reference tile is generally realized by the so-called light trap - a cavity which simulates the absorption of an absolutely black body. The magazine with reference tiles has a defined reference plane from which the laser sensor of the distance of the measuring head from the textile measures the distance of the measuring head from the reference tiles.

Continuous colour measurement of a textile according to the method disclosed in the invention is carried out in pre-defined saw-tooth or longitudinal parallel tracks while the textile is moving, using a general integrator, particularly an integrating sphere **30,** and a simultaneous two-channel spectrum analyzer **31.** Several layers of the same textile or one layer of defined colour are used as a screen of the textile **5** under the point of measurement.

To make the continuous measurements more accurate, the method can be supplemented with carrying out measurements on occasionally or in predefined areas stopped textile **5** with the measuring orifice **300** being in contact with the textile **5.**

In addition, other measurements may be added during the reverse winding of the textile **5.**

### Industrial applicability

The invention may be applied for continuous monitoring the colour of flat textiles and it is also possible to include the measuring machine according to the invention in a continuous dyeing line and to influence the process of dyeing via feedback.

### List of references

| | |
|---|---|
| 1 | measuring machine |
| 2 | rewinding machine |
| 20 | feeding device |
| 201 | board |
| 202 | tub |
| 203 | stand |
| 204 | carriage with low sidewalls |
| 21 | winding device |
| 211 | cylindrical package |
| 212 | guide rollers |
| 213 | guide rollers |
| 214 | guide rollers |

| 22 | cross beam |
|---|---|
| 221 | rail of cross beam |
| 222 | carriage of vertical linear guide system |
| 223 | vertical linear guide system |
| 224 | stepping motor of vertical linear guide system |
| 225 | toothed rack of cross beam |
| 226 | toothed pinion |
| 227 | bearing countershaft |
| 228 | flexible coupling |
| 229 | stepping motor of transverse drive of measuring head |
| 230 | driving pulley |
| 231 | reversible pulley |
| 232 | toothed belt |
| 233 | stepping motor of transverse drive |
| 234 | pulley of transverse drive of measuring head |
| 235 | countershaft |
| 236 | guide roller |
| 237 | guide roller |
| 238 | coupling of transverse drive of measuring head |
| 3 | measuring head |
| 30 | integrating sphere |
| 300 | measuring orifice |
| 301 | light source |
| 302 | shade |
| 303 | inlet collimator of reference light |
| 304 | luminous conductor of reference light |
| 305a | collimator of measured light |
| 305b | inlet collimator of measured light |
| 306 | luminous conductor of measured light |
| 31 | two-channel simultaneous spectrum analyzer |
| 311 | outlet collimator of reference light |
| 312 | outlet collimator of measured light |
| 32 | stabilized power supply of analyzer |
| 33 | stabilized power supply of light source of integrating sphere |
| 34 | ventilator |
| 341 | ventilator of first circuit |
| 342 | ventilator of second circuit |
| 35 | stabilized power supply of ventilator |
| 351 | stabilized power supply of ventilator of the first circuit |
| 352 | stabilized power supply of ventilator of the second circuit |
| 36 | thermometer |
| 361 | thermometer of the first circuit |
| 362 | thermometer of the second circuit |
| 4 | computer |
| 5 | textile being measured |
| 50 | plane perpendicular to direction of measurement |
| 6 | magazine of reference tiles |
| 60 | reference tiles |
| 601 | white reference tile |
| 602 | black reference tile |
| 603 | control reference tile |
| 61 | linear guide system of reference tiles |
| 62 | slider |
| 63 | stepping motor of reference tiles |
| 64 | reference board |
| 641 | reference plane |
| 65 | spring |

**Claims**

1. A method of continuous colour measurement of flat textiles on a measuring machine (1), in which the flat textile (5) being measured is guided along a predetermined path, **whereby** the moving textile (5) being measured is at the point of measurement illuminated by diffuse light, which is generated in an integrating sphere from reference light radiated by a source (301) of light, whereby the diffuse light comes out of the integrating sphere through a measuring orifice (300), whose distance from the textile (5) is maintained constant, and, simultaneously, having passed through the inner space of the integrating sphere the light being measured which contains diffuse light reflected and scattered off the textile (5) is sensed from the inner surface of the integrator by one channel, whereas the reference light of the source (301) of light is sensed from the inner space of the integrating sphere by the other channel, whereupon the instantaneous spectrum of the reference light is measured as well as the instantaneous spectrum of the measured light merged with the spectrum of the reference light, and from these values the spectrum of the colour of the textile (5) being measured is computed, whereby the translucence of the textile (5), being measured is compensated for by placing a suitable screen under the textile (5) being measured at the point of measuring, **characterized in that** the distance of the measuring orifice (300) of the integrating sphere (30) from the surface of the moving textile (5) is continuously measured and maintained in the range of 1 ± 0,05 mm.

2. The method according to Claim 1, **characterized in that** before starting continuous measurements on the moving textile (5), the first colour measurement is carried out on the textile (5), which has been stopped, at the point of the contact of the measuring orifice (300) of the integrating sphere with the textile (5) and the second measurement is performed at the same point above the textile (5), which has been stopped, at a nominal distance of 1 ± 0,02 mm of the measuring orifice (300) of the integrating sphere from the textile (5), whereby both results of measurement are used to determine a corrective coefficient for the following continuous measurements.

3. The method according to Claim 2, **characterized in that** stopping the textile (5) and colour measurement during the contact of the measuring orifice (300) with the textile (5) and colour measurement at the same point at a nominal distance of 1 ± 0,02 mm of the measuring orifice (300) from the textile (5) are repeated at selected time or length intervals.

4. The method according to any of the previous Claims, **characterized in that** the computed spectrum of the colour of the textile (5) being measured is assigned to a particular point of the textile (5), on which the measurement was performed and the spectrum of the colour of the textile (5) being measured together with the assigned point of the textile (5) are stored in the memory and/or are displayed and/or are used for feedback control of the dyeing process.

5. The method according to any of the previous Claims, **characterized in that** the measurement is carried out also during the reverse motion of the textile, whereby the integrating sphere occupies a different crosswise position relative to the textile.

6. A measuring machine for carrying out the method of continuous colour measurement of flat textiles according to any of the previous Claims, comprising means of transferring the textile (5) within the measuring zone, means of stretching the textile and at least one measuring head (3) movable crosswise to the direction of the motion of the textile and perpendicular to the textile (5), whereby the measuring head (3) comprises a source (301) of reference light and an integrating sphere for generating diffuse light from the reference light, provided at the point of measurement with a measuring orifice (300), whereby the measuring head (3) is mounted on a cross beam (22), the integrating sphere being connected by two luminous conductors (304, 306) to a two-channel simultaneous spectrum analyzer (31), whose outlet is connected to a computer (4), the first luminous conductor (304) for collecting reference light from the inner space of the integrating sphere, the second luminous conductor (306) for collecting diffused light reflected and scattered off the textile and having passed through the inner space of the integrating sphere, whereby at the point of measurement there is a screen under the textile (5) to compensate for the translucence of the textile (5) during the measurement process, **characterized in that** the measuring head is coupled to means for measuring and maintaining a constant vertical distance of the measuring orifice (300) of the integrated sphere from the textile (5) during the measurement, whereby the distance of the measuring orifice of the integrating sphere from the surface of the moving textile (5) is 1 ± 0,05 mm, whereby the screen under the textile (5) at the point of measurement is at least one layer of the same textile or a layer of grey achromatic colour which is by its lightness identical or nearly identical to the lightness of the textile (5) being measured.

7. The measuring machine according to Claim 6, **characterized in that** the layer/layers for underlying the textile (5) being measured by at least one layer of the measured textile at the point of measurement is/are composed of a cylindrical package (211) of the measured textile onto which the measured textile is wound.

8. The measuring machine according to Claim 6, **characterized in that** the layer/layers for underlaying the textile (5) being measured by at least one layer of the measured textile at the point of measurement is/are formed by reversedly guided textile (5) being measured, which has already passed through the point of measurement.

9. The measuring machine according to Claim 6, **characterized in that** the layer/layers for underlaying the textile being measured by at least one layer of the measured textile is/are formed by the inner end of the measured textile (5) stored in folds, the beginning of which is inserted in a feeding device (20) and is guided through the measuring place to a depositing place.

10. The measuring machine according one of Claims 6 to 9, **characterized in that** the measuring head (3) is mounted on a movable member (2231), which is mounted adjustably in the vertical direction on the vertical linear guide system (223), which is mounted on a cross beam (22), whereby the movable member (2231) is coupled to a drive (224) in the control circuit of which a sensor of the distance of the measuring orifice (300) of the integrating sphere from the textile (5) is included, capable of maintaining a constant distance of the measuring orifice (300) of the integrating sphere in the range of $1 \pm 0,05$ mm.

11. The measuring machine according to Claim 10, **characterized in that** it comprises at least two measuring heads (3), wherein each movable member (2231) with the measuring head (3) is mounted adjustably in a crosswise direction on a cross beam (22), whereby it is adjustable in a crosswise direction outside the width of the textile (5), where a magazine (6) of reference tiles is arranged, and the measuring orifice (300) of the integrating sphere can occupy a position above the reference tile (60), approach it and get into contact with it, whereupon after calibration the movable member is able to move to a parking position and release the space over the reference tiles for the next measuring head.

**Patentansprüche**

1. Verfahren zur kontinuierlichen Messung der Farbigkeit von Flächentextilien auf einer Messmaschine (1), auf der die zu messende Flächentextilie (5) in einer im Voraus bestimmten Bahn geführt wird, wobei die sich bewegende zu messende Textilie (5) in der Stelle der Messung mit einem diffusen Licht beleuchtet wird, das in einer Integrationskugel aus einem Referenzlicht gebildet wird, das durch eine Lichtquelle (301) emittiert wird, wobei das diffuse Licht aus der Integrationskugel durch eine Messungsöffnung (300) austritt, deren Abstand von der Textilie (5) gleichbleibend gehalten wird, und, nachdem es den Innenraum der Integrationskugel passiert hat, das zu messende Licht durch einen Kanal gleichzeitig aufgenommen wird, das ein diffuses Licht aufweist, das von der Textilie (5) reflektiert und zerstreut wird, und durch einen anderen Kanal aus dem Innenraum der Integrationskugel ein Referenzlicht einer Lichtquelle (301) aufgenommen wird, wonach das sofortige Spektrum des Referenzlichtes und das sofortige Spektrum des zu messenden Lichtes gemessen werden, das mit dem Spektrum des Referenzlichtes vereinigt wird und davon das Spektrum der Farbigkeit der zu messenden Textilie (5) berechnet wird, wobei durch eine geeignete Unterlegung der zu messenden Textilie (5) in der Stelle der Messung der Lichtspalt der zu messenden Textilie (5) kompensiert wird, **dadurch gekennzeichnet, dass** der Abstand der Messungsöffnung (300) der Integrationskugel (30) von der Oberfläche der sich bewegenden Textilie (5) kontinuierlich gemessen und im Intervall von $1 \pm 0,05$ mm gehalten wird.

2. Verfahren nach dem Anspruch 1, **dadurch gekennzeichnet, dass** vor dem Anfang der Messung auf der sich bewegenden Textilie (5) erste Messung der Farbigkeit oberhalb der angehaltenen Textilie (5) beim Kontakt der Messungsöffnung (300) der Integrationskugel mit der Textilie (5) und zweite Messung in derselben Stelle oberhalb der angehaltenen Textilie (5) in einem Nennabstand von $\pm 0,02$ mm der Messungsöffnung (300) der Integrationskugel von der Textilie (5) durchgeführt werden, wobei beide Messungsergebnisse zur Festlegung eines Korrekturkoeffizienten zur weiteren Messung verwendet werden.

3. Verfahren nach dem Anspruch 2, **dadurch gekennzeichnet, dass** das Anhalten der Textilie (5) und die Messung der Farbigkeit beim Kontakt der Messungsöffnung (300) mit der Textilie (5) und Messung der Farbigkeit in derselben Stelle bei einem Nennabstand von $1 \pm 0,02$ mm der Messungsöffnung (300) von der angehaltenen Textilie (5) in den gewählten Zeit- oder Längenintervallen wiederholt werden.

4. Verfahren nach einem der vorangehenden Ansprüche, **dadurch gekennzeichnet, dass** das berechnete Spektrum der Farbigkeit der zu messenden Textilie (5) der jeweiligen Stelle der Textilie (5) zugeordnet wird, auf der die Messung durchgeführt wurde, und das Spektrum der Farbigkeit der zu messenden Textilie (5) zusammen mit der zugeordneten Stelle der Textilie (5) gespeichert und/oder abgebildet und/oder in einer Rückkopplung zur Steuerung eines Färbungsprozesses verwendet wird.

5. Verfahren nach einem der vorangehenden Ansprüche, **dadurch gekennzeichnet, dass** die Messung auch bei einer Rückwärtsbewegung der Textilie erfolgt, wobei die Integrationskugel eine andere Querlage in Bezug auf Textilie einnimmt.

6. Messmaschine zur Durchführung des Verfahrens zur kontinuierlichen Messung der Farbigkeit von Flächentextilien nach einem der vorangehenden Ansprüche, die die Mittel zum Versetzen der Textilie (5) durch die Messungszone, Mittel zum Aufspannen der Textilie und mindestens einen Messungskopf (3) aufweist, der in der Querrichtung zur Bewegung der Textilie und in der zur Textilie (5) senkrechten Richtung versetzbar ist, wobei der Messungskopf eine Quelle (301) eines Referenzlichtes und eine Integrationskugel zur Bildung eines diffusen Lichtes aus dem Referenzlicht, aufweist, die in der Stelle der Messung eine Messungsöffnung (300) aufweist, wobei der Messungskopf (3) auf einem Querträger (22) gelagert ist, die Integrationskugel durch zwei Lichtleiter (304, 306) mit einem simultanen Zweikanalspektralanalysator (31) verkoppelt ist, dessen Ausgang mit einem Computer (4) verbunden ist, wobei der erste Lichtleiter (304) der Sammlung des Referenzlichtes aus dem Innenraum der Integrationskugel dient und der zweite Lichtleiter (306) der Sammlung des diffusen Lichtes dient, das von der Textilie reflektiert und zerstreut wird und den Innenraum der Integrationskugel passiert, wobei in der Stelle der Messung die Textilie (5) zur Kompensation eines Lichtspaltes der Textilie (5) während der Messung untergelegt ist, **dadurch gekennzeichnet, dass** der Messungskopf mit den Mittel zur Messung und Erhaltung eines gleichbleibenden senkrechten Abstandes der Messungsöffnung (300) der Integrationskugel von der Textilie während der Messung verbunden ist, wobei der Abstand der Messungsöffnung der Integrationskugel von der Oberfläche der sich bewegenden Textilie (5) $1 \pm 0,05$ mm ist, wobei die Textilie (5) in der Stelle der Messung mit mindestens einer Schicht derselben Textilie oder mit einer Unterlage einer grauen achromatischen Farbe untergelegt ist, die mit ihrer Helligkeit der Helligkeit der zu messenden Textilie (5) überstimmend oder nah ist.

7. Messmaschine nach dem Anspruch 6, **dadurch gekennzeichnet, dass** die Schicht/Schichten zum Unterlegen der zu messenden Textilie (5) in der Stelle der Messung mit mindestens einer Schicht der zu messenden Textilie durch eine zylindrische Aufwicklung (211) der zu messenden Textilie gebildet wird/werden, auf die die zu messenden Textilie nach der Messung aufgewickelt wird.

8. Messmaschine nach dem Anspruch 6, **dadurch gekennzeichnet, dass** die Schicht/Schichten zum Unterlegen der zu messenden Textilie (5) in der Stelle der Messung mit mindestens einer Schicht der zu messenden Textilie durch eine zurück zu führende zu messende Textilie (5) gebildet wird/werden, die die Stelle der Messung bereits passiert hat.

9. Messmaschine nach dem Anspruch 6, **dadurch gekennzeichnet, dass** die Schicht/Schichten zum Unterlegen der zu messenden Textilie (5) mit mindestens einer Schicht der zu messenden Textilie durch ein Ende der zu messenden Textilie (5) gebildet wird/werden, die in den Lagern gelagert wird, deren Anfang in eine Zuführeinrichtung (20) eingelegt wird und über eine Messstelle in den Lagerort geführt wird.

10. Messmaschine nach einem der Ansprüche 6 bis 9, **dadurch gekennzeichnet, dass** der Messungskopf (3) auf einem beweglichen Glied (2231) gelagert ist, das in der senkrechten Richtung auf einer senkrechten linearen Führung (223) verstellbar gelagert ist, die auf einem Querträger (22) gelagert ist, wobei das bewegliche Glied (2231) mit einem Antrieb (224) verkoppelt ist, in dessen Steuerungskreis ein Sensor des Abstandes der Messungsöffnung (300) der Integrationskugel von der Textilie (5) eingeordnet ist, der im Stande ist, einen gleichbleibenden Abstand der Messungsöffnung (300) der Integrationskugel im Intervall von $1 \pm 0,05$ mm zu halten.

11. Messmaschine nach dem Anspruch 10, **dadurch gekennzeichnet, dass** sie mindestens zwei Messungsköpfe (3) aufweist, wobei jedes bewegliche Glied (2231) mit dem Messungskopf (3) auf dem Querträger (22) in einer Querrichtung verstellbar gelagert ist, und in der Querrichtung außerhalb der Breite der Textilie (5) versetzbar ist, wo ein Kaliberbehälter (6) angeordnet ist und die Messungsöffnung (300) der Integrationskugel im Stande ist, eine Lage oberhalb des Kalibers (60) einzunehmen, sich ihm zu nähern und mit ihm Kontakt zu erreichen, wonach das bewegliche Glied nach der Kalibrierung im Stande ist, sich in eine Parklage zu versetzen und die Stelle oberhalb der Kaliber für einen weiteren Messungskopf freizumachen.

**Revendications**

1.  Procédé de la mesure continue de la couleur des tissus plats sur une machine de mesure (1), dans lequel le tissu plat mesuré (5) est guidé dans un chemin prédéterminé, tandis que le tissu mesuré en mouvement (5) est éclairé au point de la mesure par une lumière diffuse produite dans la sphère d'intégration à partir d'une lumière de référence émise par la source (301) lumineuse, tandis queune lumière diffuse émane de la sphère d'intégration à travers l'orifice de mesure (300) dont la distance par rapport au tissu (5) est maintenue constante, et en même temps, après avoir traversé l'espace intérieur de la sphère d'intégration à travers un canal, la lumière mesurée est capturée, contenant une lumière diffuse réfléchie et diffusée du tissu (5), et par le deuxième canal on détecte la lumière de référence de la source (301) de la lumière depuis l' espace intérieur de la sphère d'intégration, après quoi on mesure le spectre instantané de la lumière de référence et le spectre instantané de la lumière mesurée combinés avec le spectre de la lumière de référence et le spectre de la couleur du tissu mesuré (5) est calculé à partir d'eux, tandis que par un support approprié du tissu mesuré (5) au point de la mesure on compense la transparance du tissu mesuré (5), **caractérisé en ce que** la distance de l'orifice de mesure (300) de la sphère d'intégration (30) de la surface du tissu en mouvement (5) est mesurée en continu et maintenue à un intervalle de 1 ± 0,05 mm.

2.  Procédé selon la revendication 1, **caractérisé en ce que,** avant le début de la mesure sur le tissu mobile (5), une première mesure de la couleur est effectuée au-dessus du tissu arrêté (5) lors du contact de l'orifice de mesure (300) de la sphère d'intégration avec le tissu (5) et la deuxième mesure au même endroit au-dessus du tissu arrêté (5) à une distance nominale de 1 ± 0,02 mm de l'orrifice de mesure (300) de la sphère d'intégration du tissu (5), tandis que les deux résultats de la mesure sont utilisés pour déterminer le coefficient de la correction pour d'autres mesures.

3.  Procédé selon la revendication 2, **caractérisé en ce que** l'arrêt du tissu (5) et la mesure de la couleur lorsque le contact de l'orifice de mesure (300) avec le tissu (5) et les mesures de la couleur au même endroit à une distance nominale de 1 ± 0,02 mm de l'orrifice de mesure (300) du tissu arrêté (5) sont répétées à des intervalles de temps ou de longueur sélectionnés.

4.  Procédé selon l'une quelconque des revendications précédentes, **caractérisé en ce que** le spectre des couleurs calculé du tissu mesuré (5) est affecté à un emplacement particulier du tissu (5) auquel la mesure a été effectuée et le spectre de la couleur du tissu mesuré (5) avec l'emplacement attribué au tissu (5) sont enregistrés en mémoire et / ou imagés et / ou utilisés en rétroaction pour contrôler le processus de la teinture.

5.  Procédé selon l'une quelconque des revendications précédentes, **caractérisé en ce que** la mesure est également effectuée lors du mouvement de recul du tissu, tandis que la sphère d'intégration occupe une position transversale différente par rapport au tissu.

6.  Machine de mesure pour mettre en œuvre un procédé de mesure en continu de la couleur des tissus plats selon l'une quelconque des revendications précédentes, comprenant des moyens pour déplacer le tissu (5) à travers la zone de mesure, des moyens pour tendre le tissu et au moins une tête de mesure (3) déplaçable dans la direction transversale du mouvement du tissu et dans la direction perpendiculaire au tissu (5), tandis que la tête de mesure (3) comprend une source de la lumière de référence (301) et une sphère d'intégration pour générer une lumière diffuse à partir de la lumière de référence munie d'un orifice de mesure (300) au point de mesure, tandis que la tête de mesure (3) est logée sur un support transversal (22), la sphère d'intégration est connectée par deux conducteurs de la lumière (304, 306) à un analyseur de spectre simultané à deux canaux (31), dont la sortie est connectée à un ordinateur (4), tandis quele premier guide de lumière (304) sert à collecter la lumière de référence de l'espace intérieur de la sphère d'intégration et un second guide de lumière (306) est utilisé pour collecter la lumière diffuse réfléchie et diffusée par le tissu et traversante par l'intérieur de la sphère d'intégration, tandis que dans le point de la mesure le tissu (5) est supporté pour compenser la transparance du tissu (5) pendant la mesure, **caractérisé en ce que** la tête de mesure est reliée à des moyens pour la mesure et pour la conservation d'une distance verticale constante de l'orifice de mesure (300) de la sphère d'intégration du tissu pendant la mesure, tandis que la distance de l'orifice de mesure de la sphère d'intégration à la surface du tissu en mouvement (5) est de 1 ± 0,05 mm, tandis que le tissu (5) est supporté au point de la mesure par au moins une couche du même tissu ou par un support de la couleur achromatique grise identique ou proche par son teint clair au tissu mesuré (5).

7.  Machine de mesure selon la revendication 6, **caractérisée en ce que** la ou les couches pour supporter les tissus mesurés (5) dans le point de la mesure avec au moins une couche du tissu mesuré est/sont formées par un rouleau (211) du tissu mesuré sur lequel le tissu mesuré est enroulé après la mesure.

8. Machine de mesure selon la revendication 6, **caractérisée en ce que** la ou les couches pour supporter les tissus mesurés (5) dans le point de mesure avec au moins une couche du tissu mesuré est/sont constituées d'un tissu mesuré à conduite inverse (5), qui a déjà passé le point de mesure.

9. Machine de mesure selon la revendication 6, **caractérisée en ce que** la ou les couches pour supporter le tissu mesuré par au moins une couche du tissu mesuré est/sont formées par l'extrémité du tissu mesuré (5) stockée en stockage dont le début est inséré dans le dispositif d'alimentation (20) et conduit à travers le point de mesure jusqu'à l'emplacement de stockage.

10. Machine de mesure selon l'une quelconque des revendications 6 à 9, **caractérisée en ce que** la tête de mesure (3) est logée sur un élément mobile (2231) qui est réglable dans le sens vertical sur un guide linéaire vertical (223), qui est logé sur un support traversai (22), tandis que le membre mobile (2231) est couplé à un entraînement (224) dans le circuit de commande duquel est disposé un capteur de la distance entre l'orifice de mesure (300) de la sphère d'intégration du tissu (5), qui est capable de maintenir une distance constante entre l'orifice de mesure (300) de la sphère d'intégration à un intervalle de $1 \pm 0,05$ mm.

11. Machine de mesure selon la revendication 10, **caractérisée en ce qu'**elle comprend au moins deux têtes de mesure (3), tandis que chaque élément mobile (2231) avec la tête de mesure (3) est monté déplaçable sur le support traversai (22), logé déplaçable dans le sens transversal, et il est dans le sens transversal déplaçable en dehors de la largeur du tissu (5), où un magasin des calibres (6) est organisé, et l'orifice de mesure (300) de la sphère d'intégration est capable à se positionner au dessus du calibre (60), de l'approcher et de le contacter, après quoi l'élément mobile peut se déplacer vers la position du stationnement et libérer la place au-dessus des calibres à une autre tête de mesure .

Fig. 1

Fig. 2

Fig. 3

Fig. 4

212                212    5

212       213          213

5      213          213

Fig. 5a

212   213        213   212    5

5

214          214

Fig. 5b

212   213        213      5

5       214         214   212

Fig. 5c

23

Fig. 6a

Fig. 6b

Fig. 6c

Fig. 7

Fig. 8a

Fig. 8b

Fig. 9a

Fig. 9b

Fig. 10a

Fig. 10b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 10102607 A
- WO 2005108083 A1
- EP 1936337 B1
- EP 2637004 A1
- US 8493564 B2
- US 8149405 B2
- US 8446585 B2
- US 5844680 A
- WO 9609524 A
- WO 9642010 A
- US 8441642 B2
- EP 0889320 B1
- JP H08015028 A

- DE 10102607 A1
- EP 2394162 B1
- US 2007153277 A
- US 20030227627 A
- JP 51099088 A
- US 7684041 B2
- JP 2014149275 A
- US 3999860 A
- US 3936189 A
- EP 0181155 A2
- EP 1642098 B1
- JP H08015018 A

### Non-patent literature cited in the description

- Automated vision inspection systems increase customer confidence in the textile industry. Shelton Vision Systems Ltd, 29 September 2004

- **WYSZECKI, G. ; STILES, W. S.** Color Science: Concepts and Methods, Quantitative Data and Formulae. John Wiley and Sons, 1982